Europäisches Patentamt

European Patent Office

Office européen des brevets

(11) Numéro de publication : **0 444 991 A1**

# (12) DEMANDE DE BREVET EUROPEEN

(21) Numéro de dépôt : **91400379.3**

(22) Date de dépôt : **14.02.91**

(51) Int. Cl.⁵ : **C08J 5/04, C08J 11/06**

(30) Priorité : **15.02.90 FR 9001820**

(43) Date de publication de la demande :
**04.09.91 Bulletin 91/36**

(84) Etats contractants désignés :
**AT BE CH DE DK ES FR GB GR IT LI LU NL SE**

(71) Demandeur : **PEIGNAGE AMEDEE**
**154, rue de Cartigny**
**F-59100 Roubaix (FR)**

(72) Inventeur : **Leman, Bernard**
**37 avenue Anatole France**
**F-59100 Roubaix (FR)**
Inventeur : **Visticot, Jean-Marie Emile**
**1 Allée Robespierre**
**F-59150 Wattrelos (FR)**

(74) Mandataire : **Lepeudry-Gautherat, Thérèse et al**
**CABINET LEPEUDRY 6 rue du Faubourg**
**St-Honoré**
**F-75008 Paris (FR)**

(54) **Matériau composite à matrice thermoplastique contenant des fibres d'origine animale, son procédé de fabrication et son utilisation.**

(57) L'invention concerne un matériau composite à matrice thermoplastique et charge fibreuse.
La charge fibreuse de ce matériau composite comprend des fibres d'origine animale contenant au moins 2 % de graisses, notamment animales, et plus particulièrement des fibres de laine.
Les qualités d'isolation de ce matériau en permettent de larges utilisations, notamment dans le domaine du bâtiment.

EP 0 444 991 A1

## MATERIAU COMPOSITE A MATRICE THERMOPLASTIQUE CONTENANT DES FIBRES D'ORIGINE ANIMALE, SON PROCEDE DE FABRICATION ET SON UTILISATION

La présente invention concerne un nouveau matériau composite à matrice thermoplastique, son procédé de fabrication et son utilisation.

Les matériaux composites constitués de polymères auxquels on a incorporé diverses charges de nature différente sont largement connus.

Leur utilisation se développe sans cesse étant donné les propriétés intéressantes qu'ils offrent, grâce auxquelles ils remplacent de plus en plus des matériaux traditionnels, tels que le métal. Les charges incorporées dans de tels matériaux sont en particulier des charges fibreuses. Les matières utilisées pour ces fibres sont le plus souvent des matières polymères de nature différente ou des matières minérales telles que verre ou carbone.

Par ailleurs le problème de l'évacuation des déchets de type polymères est souvent difficile à résoudre, notamment dans le cas des matières polymères halogénées, et, en tout état de cause, représente à la fois une charge financière pour l'industriel qui a à évacuer de tels déchets, et également une nuisance pour l'environnement, dont la maîtrise est rarement assurée de façon satisfaisante.

Un certain nombre de techniques ont été mises au point pour la valorisation de tels déchets, notamment ceux à base de matières thermoplastiques. Il existe ainsi un procédé appelé plast-densification qui permet d'obtenir à partir de déchets de production de matières thermoplastiques, des granulés qui peuvent être ensuite transformés en produits finis.

Ainsi dans le document japonais KENKYU HOKOKU-KANAGAWA-KEN KOGYO SHIKENSHO 1978, (48), 65-7, résumé dans CHEMICAL ABSTRACTS, vol.93, n° 8, 25 août 1980, page 60, abstract n° 73155 j, I. Takahashi et coll. décrivent l'étude de l'utilisation de déchets de plastiques et de fibres pour obtenir des plastiques renforcés présentant une résistance aux chocs nettement améliorée, alors que les autres propriétés physiques telles que le module d'élasticité ne sont que très peu modifiées. De plus, les produits moulés qu'ils obtiennent sont très hydrophiles.

Ils décrivent entre autres un composite moulé de polyéthylène contenant 40 % en poids de fibres de laine provenant de déchets de tissu qui présente ces propriétés jugées avantageuses.

Ce document enseigne donc que l'on peut améliorer la résistance aux chocs des matières polymères sans modifier de manière importante leurs autres propriétés physiques, en y incorporant des fibres de laine provenant de déchets de tissu et que les produits moulés obtenus avec de tels composites sont très hydrophiles.

Dans ce document, il n'est fait aucune allusion à d'éventuelles propriétés d'isolation phonique et/ou thermique des matériaux obtenus mais on insiste au contraire sur leur caractère hydrophile.

Il convient de noter que les fibres de laine utilisées, dans la mesure où elles proviennent d'étoffes, sont très fortement dégraissées : elles présentent une teneur en graisses animales de 0,1 % au maximum, comme cela est bien connu. Dans ces conditions, elles produisent essentiellement un effet de renforcement, comme de nombreuses autres fibres d'origine minérale ou végétale.

La demanderesse a maintenant découvert qu'il était possible d'obtenir un matériau composite, utilisable notamment comme isolant thermique et phonique, en incorporant dans une matière polymère thermoplastique des fibres d'origine animale contenant au moins 2 % de graisses, notamment animales, en particulier des fibres de laine, et que ce produit ainsi mis au point pouvait provenir aussi bien de matières premières "nobles" que de matières de récupération.

L'invention concerne donc un nouveau matériau composite à matrice thermoplastique et charge fibreuse, caractérisé en ce que la charge fibreuse comprend des fibres d'origine animale contenant au moins 2 % de graisses, notamment animales, et plus particulièrement des fibres de laine.

Le polymère utilisé pour la fabrication d'un tel composite est choisi parmi les polyoléfines telles que le polyéthylène ou le polypropylène basse et haute densité , le polystyrène, les polyesters, le chlorure de polyvinyle, les polyamides etc...

Les fibres d'origine animale sont en particulier des fibres de laine contenant au moins 2 % de suint qui peuvent être longues ou courtes, en fonction des caractéristiques, notamment mécaniques, recherchées pour le produit et des impératifs de coût de fabrication. Avantageusement, les fibres de laine contiennent de 3 à 7 % de suint.

Comme indiqué ci-dessus, les matières premières utilisées pour obtenir le matériau composite selon l'invention peuvent être des matières de récupération.

Il est ainsi possible d'utiliser comme matière première polymère des emballages usagés, dont la mise en décharge est coûteuse et peu satisfaisante au niveau de l'environnement.

Par ailleurs la demanderesse a constaté que l'on pouvait utiliser comme fibres de laine des déchets récu-

2

EP 0 444 991 A1

pérés au cours du traitement que subit la laine brute pour donner une laine peignée, utilisable par les filateurs. En effet dans les usines de peignage la laine brute est battue, ce qui permet de séparer les fibres, puis lavée et séchée. Après séchage elle est cardée, ce qui élimine l'essentiel des matières végétales qui étaient présentes dans les toisons et assure une certaine orientation des fibres parallèlement les unes aux autres. Elle est enfin peignée, ce qui élimine le reste des matières végétales et sépare les fibres courtes.

Au cours des opérations de cardage et de peignage des quantités importantes de déchets solides constitués de laine et de matières végétales et minérales (sable...) sont collectées. Actuellement ces déchets, qui représentent une quantité d'environ 40 tonnes par jour sur l'ensemble des installations de peignage en France, ne sont pas ou sont mal valorisés. Ils sont en effet soit mis en décharge, soit utilisés en agriculture comme engrais retard.

La demanderesse a constaté qu'il était parfaitement possible d'utiliser ces déchets pour obtenir, notamment avec un polymère de type polyoléfine, un matériau composite présentant des caractéristiques intéressantes notamment d'isolation thermique et phonique, et qui peut par exemple être utilisé dans le domaine de l'emballage et du bâtiment.

La matière thermoplastique utilisée pouvant, elle aussi, être un produit de récupération, la demanderesse a trouvé qu'il était particulièrement avantageux d'utiliser comme matière première les toiles qui emballent les ballots de laine brute et qui sont généralement en polyéthylène haute densité. Il est également avantageux d'utiliser les toiles d'emballage de la laine peignée, généralement en polyéthylène basse densité. L'utilisation de ces deux matières de récupération sur le site d'une installation de peignage permet d'optimiser le prix de revient du matériau composite dont les matières premières ne sont grevées par aucun coût de transport puisque les déchets de laine et les emballages de laine brute se trouvent sur le site et que les emballages de laine peignée peuvent être récupérés chez le filateur. En plus une telle valorisation de ces emballages évite le coût de leur mise en décharge, qu'il s'agisse des toiles emballant la laine brute ou de celles emballant la laine peignée.

Un mode de mise en oeuvre particulièrement intéressant de l'invention consiste donc à utiliser, pour la fabrication du matériau composite, les déchets de laine récupérés lors des opérations de cardage et de peignage conjointement avec les emballages usagés servant au transport de la laine brute et/ou de la laine peignée.

Les déchets de laine utilisés selon l'invention ont approximativement la composition pondérale suivante :
– laine 60 à 70 %
– matières minérales (silice) 5 à 10 %
– humidité 3 à 7 %
– graisse animale (suint) 2 à 8 %
– matières végétales 15 à 20 %

Ces déchets de laine sont incorporés au polymère thermoplastique en quantité inférieure ou égale à 60 % en poids environ. Une quantité supérieure à cette limite donne un produit qui présente un aspect fortement cartonneux et est peu cohérent. De préférence la quantité de déchets de laine sera comprise entre 40 et 60 % du poids du polymère.

Lorsque l'on utilise des toiles d'emballage, celles-ci sont déchiquetées avant d'être mélangées aux fibres ou aux déchets de laine.

Le traitement du mélange polymère/fibres animales se fait de préférence dans une installation de plast-densification, telle qu'un plast-densificateur de la société Pallmann Maschinenfabrik GmbH.

Il est en effet important d'utiliser une installation permettant d'éviter les contraintes thermiques importantes qui pourraient notamment dégrader les fibres animales. En ce qui concerne plus particulièrement les fibres de laine, il est souhaitable de ne pas dépasser une température de 200° C.

La technique de plast-densification qui permet de produire des granulés polymères par densification douce utilisant la chaleur produite par le frottement, est donc particulièrement bien adaptée.

Selon cette technique, le mélange de polymère et de fibres est amené par une vis sans fin dans une chambre de densification.

Le matériau, qui ne reste que quelques secondes dans la chambre de densification, est ensuite pressé à travers une matrice à perforations et coupé par des couteaux. Le matériau passe ensuite dans un granulateur où il est broyé jusqu'à obtention de granulés réguliers ayant la taille requise.

Les granulés de matériau composite obtenu peuvent être éventuellement utilisés tels quels, par exemple comme matière de garnissage ou de remplissage. Mais ils peuvent être également façonnés en plaques, ou en pièces de formes diverses par pressage, moulage ou extrusion.

On peut bien entendu incorporer au matériau selon l'invention les adjuvants usuels pour ce type de produit tels que des colorants, des pigments, des plastifiants, des stabilisants, des ignifugeants. Pour résoudre les problèmes spécifiques que peut également poser la présence de fibres animales telles que la laine on peut incorporer au matériau des additifs plus spécifiques tels qu'insecticides et acaricides. On peut également, pour renforcer les qualités d'isolation du matériau, expanser le produit, en ajoutant par exemple un agent porogène

3

au mélange.

Lorsque l'on examine le matériau obtenu on constate que les fibres ne sont pas complètement enserrées par la matière polymère : en fait il reste une zone vide autour des fibres qui restent ainsi bien individualisées. Ce phénomène est sans doute dû à la présence de la graisse animale (suint) enrobant les fibres à l'origine et qui a empêché le polymère de venir totalement au contact des fibres. Cette particularité de structure contribue vraisemblablement aux qualités d'isolation du matériau selon l'invention. Il est donc à cette fin essentiel d'utiliser des fibres qui n'ont pas été totalement dégraissées, c'est-à-dire qui comprennent au moins 2 % de graisses, notamment animales.

Comme indiqué ci-dessus le matériau selon l'invention trouve application dans des domaines variés, tels que le bâtiment et l'emballage.

Il peut être mis en oeuvre à l'état de granulés, par exemple comme matière de garnissage ou comme isolant en particulier. Il peut être aussi transformé en plaques, tubes, panneaux et pièces diverses. Il est bien sûr possible, à des fins d'esthétique, de revêtir une ou les deux faces des éléments fabriqués à partir du matériau selon l'invention, par exemple par coextrusion avec un autre matériau.

L'exemple suivant illustre l'invention sans toutefois en limiter la portée.

Exemple

On introduit dans un plast-densificateur Pallmann de type P.F.V. 250/60 du polyéthylène avec 50 % de déchets de laine.

Le polyéthylène est du polyéthylène basse densité provenant des toiles d'emballage de la laine peignée.

Les déchets de laine ont la composition approximative suivante (% en poids) :

```
- laine...................70
- matières minérales.......5
- humidité................5
- suint...................5
- matières végétales......15
```

On effectue la plast-densification à une température comprise entre 160 et 180 ° C.

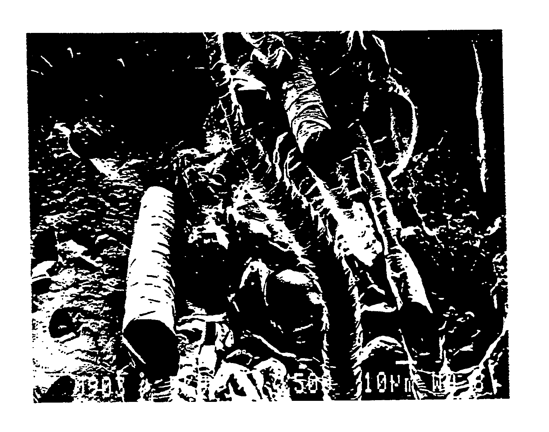

A partir des granulés produits, on forme par moulage une plaque de 5 mm d'épaisseur environ. Par microphotographie on constate (cf figure unique) que la structure est constituée de fibres entourées de façon non jointive par la matrice polymère.

Ce matériau constitue un très bon isolant thermique et phonique.

Les caractéristiques du matériau obtenu sont les suivantes :

```
Transition vitreuse °C (DSC)  ....:  -  109
Température de fusion °C (DSC)....:    111
Densité..........................:     1
Dureté shore D...................:    50
Ramollissement VICAT.A (°C)......:   97,5
Fragilité au froid (°C)..........:supérieure à +10
Contrainte maximale en
traction (MPa)...................: 6,3 ; après
                                   7 jours à
                                   70°C : 6,4
Allongement %....................: 3,6 ; après
                                   7 jours à
                                   70°C : 3,6
Conductibilité thermique
(Watt/m/°C)......................:  0,215.
```

A titre de comparaison, avec des déchets de polyéthylène utilisés seuls, on obtient, dans les mêmes conditions:

```
Dureté shore D...................: 45,5
Ramollissement VICAT.A (°C).........: 94
Contrainte maximale en
traction (MPa)...................: 10,2 ; après
                                   7 jours à
                                   70 °C : 10,1
Allongement %....................: 15,8 ; après
                                   7 jours à
                                   70 °C : 17,8
```

On constate donc que l'addition de déchets de laine au polyéthylène, selon l'invention, ne modifie pas sensiblement la dureté et la résistance au choc du produit obtenu mais diminue fortement la résistance à la traction, contrairement à ce qui avait été obtenu par I.Takahashi et collaborateurs, notamment lorsqu'ils utilisaient des déchets de polyéthylène et d'étoffe de laine, c'est-à-dire des fibres de laine fortement dégraissées (contenant 0,1 % au maximum de graisses animales).

Les différentes caractéristiques énumérées ci-dessus ont été mesurées dans les conditions suivantes :

Température de transition vitreuse et température de fusion:

La témpérature de fusion a été déterminée par microcalorimétrie différentielle dans les conditions suivantes:

```
- plage de température balayée.........- 150 à + 200°C
- vitesse de montée en température.....10°C. min⁻¹
- masse de la prise d'essai............entre 4 et 6 mg
```

L'exploitation des thermogrammes a permis de déterminer simultanément la température de transition vitreuse et la température de fusion.

Densité:

Elle a été déterminée par pesée hydrostatique, sur le matériau non modifié, dans les conditions définies par la norme NF T 46-013.

Dureté Shore D:

Elle a été mesurée suivant la norme ASTM D 2240 sur des plaques obtenues par moulage-compression des matériaux, dans les conditions de moulage suivantes: 5 minutes à 200°C sous 20 bars, soit 2 MPa, avec refroidissement sous pression.

Ramollissement VICAT:

La mesure a été effectuée dans les conditions définies par la norme NF T 51-021, méthode A, sur des échantillons carrés de 1 cm de côté, prélevés dans les plaques remoulées en compression.

Fragilité au froid:

La mesure a été effectuée en se basant sur la norme NF T 46-018 à l'aide d'éprouvettes prélevées dans des plaques moulées issues du produit brut.

Contrainte maximale en traction et allongement avant et après vieillissement artificiel:

Les caractéristiques en traction ont été déterminées à l'aide d'éprouvettes haltères type H1 prélevées directement dans les plaques à l'état de réception et après un vieillissement accéléré en étuve ventilée, durant sept jours à 70°C.

Les essais ont été menés dans les conditions suivantes:

```
- vitesse de traction.................100 mm.min⁻¹
- type d'éprouvettes utilisées........haltères H1
- température de l'essai..............23°C
- conditionnement préalable
  des échantillons avant l'essai.......24 heures à 23°C
                                       et 50 % H.R.
```

Les éprouvettes de traction ont été prélevées parallèlement à un des côtés de chaque plaque, dans une direction d'orientation arbitrairement fixée.

Les caractéristiques mesurées durant l'essai de traction sont:
– la contrainte au seuil d'écoulement visco-élastique.
– l'allongement correspondant à la contrainte au seuil visco-élastique.

Conductibilité thermique:

Les mesures ont été menées dans les conditions définies ci-dessous:
– mise en forme des échantillons :
  . injection des éprouvettes destinées à la mesure :

```
- températures :              185/195/205/200°C buse
- pression de maintien :......30 bars, soit 3 MPa
- temps de maintien :............1 seconde
- temps d'injection :............7 secondes
- temps de refroidissement :......30 secondes
```

– forme et dimensions des éprouvettes :
. disques de diamètre 51 mm et d'épaisseur 3 mm
– conditionnement préalable des produits bruts :
. étuvage durant 2 heures à 80°C
– température de la mesure : 30°C

## Revendications

**1.-** Matériau composite à matrice thermoplastique et charge fibreuse, caractérisé en ce que la charge fibreuse comprend des fibres d'origine animale contenant au moins 2 % de graisses, notamment animales.

**2.-** Matériau composite selon la revendication 1, caractérisé en ce que les fibres d'origine animale sont des fibres de laine contenant au moins 2 % de suint.

**3.-** Matériau selon la revendication 2, caractériséen ce que les fibres de laine contiennent de 3 à 7 % de suint.

**4.-** Matériau composite selon la revendication 2 ou 3, caractérisé en ce que la charge fibreuse consiste en des déchets de laine récupérés lors des opérations de cardage et de peignage.

**5.-** Matériau composite selon la revendication 4, caractérisé en ce que les déchets de laine ont la composition pondérale suivante:
– laine 60 à 70 %
– matières minérales 5 à 10 %
– humidité 3 à 7 %
– suint 2 à 8 %
– matières végétales 15 à 20 %

**6.-** Matériau composite selon l'une quelconque des revendications 1 à 5, caractérisé en ce que la matrice thermoplastique est une polyoléfine.

**7.-** Matériau composite selon la revendication 6, caractérisé en ce que la polyoléfine est un polyéthylène ou un polypropylène.

**8.-** Matériau composite selon la revendication 7, caractérisé en ce que le polyéthylène provient de la récupération d'emballages usagés.

**9.-** Matériau composite selon l'une quelconque des revendications 1 à 8, caractérisé en ce que la charge fibreuse représente 60 % au plus du poids de polymère thermoplastique.

**10.-** Matériau composite selon la revendication 9, caractérisé en ce que la charge fibreuse représente 40 à 60 % du poids de polymère thermoplastique.

**11.-** Procédé de fabrication d'un matériau composite selon l'une quelconque des revendications 1 à 10, caractérisé en ce qu'on soumet un mélange du polymère thermoplastique et de la charge fibreuse à un traitement de plast-densification.

**12.-** Procédé selon la revendication 11 pour la fabrication d'un matériau composite à partir de polyéthylène et de déchets de laine, caractérisé en ce que la plast-densification est réalisée à une température comprise entre 160 et 180° C.

**13.-** Utilisation d'un matériau composite selon l'une quelconque des revendications 1 à 10 en tant que produit d'isolation phonique et thermique.

**14.-** Utilisation d'un matériau composite selon l'une quelconque des revendications 1 à 10 en tant que produit pour l'emballage.

Office européen
des brevets

# RAPPORT DE RECHERCHE EUROPEENNE

Numero de la demande

EP 91 40 0379

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D | CHEMICAL ABSTRACTS, vol. 93, no. 8, 25 août 1980, page 60, abstract no. 73155j, Columbus, Ohio, US; I. TAKAHASHI et al.: "Study on the utilization of plastic and fiber wastes", & KENKYU HOKOKU - KANAGAWA-KEN KOGYO SHIKENSHO 1978, (48), 65-77 * Abrégé en entier * | 1,6-9, 11,12 | C 08 J 5/04 C 08 J 11/06 |

DOMAINES TECHNIQUES RECHERCHES (Int. Cl.5)

C 08 J
C 08 L
C 08 K

Le présent rapport a été établi pour toutes les revendications

| Lieu de la recherche | Date d'achèvement de la recherche | Examinateur |
|---|---|---|
| LA HAYE | 05-06-1991 | HALLEMEESCH A.D. |